# EUROPEAN PATENT SPECIFICATION

(11) **EP 3 209 405 B1**
(45) Date of publication and mention of the grant of the patent: **19.12.2018**
(21) Application number: 15798196.0
(22) Date of filing: 16.10.2015
(51) Int. Cl.: B01D 29/44

(54) **LIQUID OR GAS FILTER SUITABLE FOR REMOVING FILAMENTARY IMPURITIES**
FLÜSSIGKEITS- ODER GASFILTER ZUR ENTFERNUNG VON FASERFÖRMIGEN VERUNREINIGUNGEN
FILTRE À LIQUIDE OU À GAZ APPROPRIÉ POUR L'ÉLIMINATION DES IMPURETÉS FILAMENTEUSES

(30) Priority: 20.10.2014 BE 201405017
(43) Date of publication of application: 30.08.2017
(73) Proprietor: Unislot NV, 8792 Desselgem (BE)
(72) Inventor: VERSTRAETE, Marc, B-8860 Lendelede (BE)
(74) Representative: Chielens, Kristof
(86) International application number: PCT/IB2015/057969
(87) International publication number: WO 2016/063185

(56) References cited:
- EP-A1- 0 607 809
- WO-A1-03/091535
- WO-A2-2009/050568
- FR-A1- 2 666 027

## Description

This invention relates to a liquid or gas filter suitable for removing impurities from liquids or gases, comprising a number of longitudinally running supporting wires on which a profiled wire is welded and wherein filtering openings are formed between one or more mutually adjacent profiled wires, the said supporting and profiled wires each comprising two side flanks, which at a first end are connected to each other via a weld foot and at a second end are connected to each other via a head part situated opposite the weld foot. The liquid filter in accordance with this invention is in particular suitable for removing elongated, filamentary impurities, such as, for example, plastics remnants, linen, fibres, or animal hairs, from a liquid or gas.

Filtration is a separation method which is widely used in industry to, inter alia, separate solid and liquid substances from each other, to filter gases, etc. In a known form of filtration, a liquid flow is led through a filter element (filter medium).

Filter elements of this type have already long been known and are commercially freely available. These known filter elements are used, for example, in so-called backwashing devices, consisting of a tube having a filter inflow and outflow opening, wherein the filter elements can be flowed through from inside to out, or vice versa, during the filtration, from outside to in, or vice versa, or during backwashing.

The known filter elements are composed of longitudinally running longitudinal bars around which a profiled wire is wound. Between one or more windings, filtering openings are formed. The number of longitudinal bars is dependent on the size of the filter element.

A commonly used profiled wire has in cross section a shape consistent with an isosceles triangle and is connected with its vertex (weld foot) to the longitudinal bars by a welding operation. With profiled wires of this type, filter elements can be produced with a gap width between the profiled wires ranging between 2 mm and 50 microns, depending on the application.

The mechanical plate filter described in French patent publication FR 2 666 027 is fully composed of profiled wires as described above. The particular filter is constructed as a grid, formed of a first series of parallelly extending profiled wires (longitudinal bars) and a second series of parallelly extending profiled wires (transverse bars), wherein the second series extends transversely to the first series. Each profiled wire has two side flanks, which at a first end are connected to each other via a weld foot and at a second end are connected to each other via a rounded head part situated opposite the weld foot. In order to avoid blockage, the profiled wires are connected to one another such that the weld foot of the profiled wires of the first series is connected (via spot welds) to the head part of the profiled wires of the second series. In shaped filter elements of this type, in the weld zone where transverse and longitudinal bars are connected to one another a weld upset is formed. This excess of material is formed by the foot part and head part of the profiled wires being pushed into each other during the welding. In the case of the filter described in FR 2 666 027, the excess of material ends up on the outer side of the profiled wires, whereby it can partially close off the filtering openings.

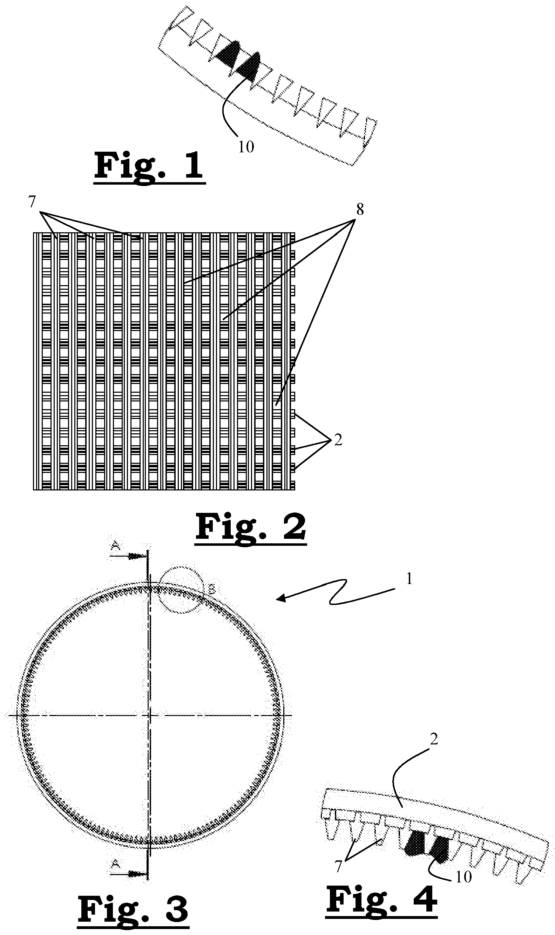

When a filter element provided with the previously described profiled wire is used to filter liquids in which filamentary impurities (for example, of a length ranging between 5 and 30 mm) are seated, such as, for example, hairs of animals or humans, fibres of clothing, synthetic fibres, etc., then the following problem arises: during the filtering, the filamentary impurities (denoted by reference numeral 10) lodge between the profiled wires, as illustrated in Figure 1. Following a passage of time, the filter element needs to be cleaned in order to remove the jammed impurities. This is realized by backwashing. However, as a result of the shape of the profiled wire, the openings between the profiled wires will become larger in the direction of the weld foot of the profiled wires, and the jammed (filtered-out) threads cannot be removed in the course of the cleaning (backwashing) due to the wedge effect (jammed threads must namely be pushed through a small opening). A filter element of this type is thus unsuitable for filtering out the particular filamentary impurities.

In the past, the patentee has developed and described a profiled wire in BE 1 017 816. The profiled wire described in this publication comprises two side flanks, which at a first end are connected to each other via a weld foot and at a second end are connected to each other via a head part situated opposite the weld foot. In this profiled wire, the distance between the said side flanks becomes larger in the direction of the weld foot and the weld foot comprises at least one protruding portion, which protrudes below the plane formed by the said first ends.

The profiled wire described in BE 1 017 816 has been specifically developed in order to solve the problem resulting from a weld upset. In view of the fact that the weld foot is now formed with a protruding portion, a space, as it were, is created for the weld upset. As a result, the weld upset, when the profiled wire is welded on a longitudinal bar, will no longer end up outside the width of the profiled wire and it becomes possible to position the profiled wire exactly on the longitudinal bars of a filter element. The longitudinal bars are rectangular in shape and are provided with a top part (cam) on which the profiled wire is welded. As a result of the shape of the profiled wire, in filter elements provided with a profiled wire of this type there is no question of wedge effect and the previously stated problem of jammed filtered-out particles during the backwashing hence does not arise. However, the filter elements described in BE 1 017 816 cannot be used to filter previously stated filamentary impurities, since these are able to pass through the filtering openings.

The object of this invention is now to produce a filter with which it becomes possible to proceed to filter filamentary impurities out of a liquid or gas.

The object of the invention is achieved by providing a liquid or gas filter suitable for removing filamentary impurities from liquids or gases, comprising a number of longitudinally running supporting wires on which a profiled wire is welded, and wherein filtering openings are provided between one or more mutually adjacent profiled wires, the said supporting and profiled wires each comprising two side flanks, which at a first end are connected to each other via a weld foot and at a second end are connected to each other via a head part situated opposite the weld foot, wherein the distance between the said side flanks of the said supporting and profiled wires becomes larger in the direction of the weld foot, which is formed of at least one protruding portion, and wherein the protruding portion of the profiled wire is connected to the protruding portion of the supporting wire. Preferably, the protruding portion of the profiled wire is welded on the protruding portion of the supporting wire.

By constructing the filter in this way and placing the supporting and profiled wires at the appropriate distance apart, a filter element with which it is possible to filter filamentary impurities, in particular filamentary impurities whose length ranges between 10 microns and 10 mm, more particularly between 50 microns and 5 mm, out of a liquid or gas is obtained.

According to a preferential embodiment of the filter in accordance with the invention, the protruding portion protrudes below the plane formed by the said first ends.

In a preferred embodiment of the filter according to the invention, the distance between the profiled wires is mutually the same as the distance between the longitudinally running supporting wires. By constructing the filter in this way, square filtering openings are formed.

In a particular embodiment of the filter according to the invention, the formed filtering openings have a gap opening having a gap width ranging between 10 and 500 microns. In the filter elements according to the invention, there is a tolerance of +/- 10 microns at the formed gap opening.

In a more particular embodiment of the filter according to this invention, the formed filtering openings have a gap opening having a gap diagonal ranging between 14 microns and 707 microns, the gap diagonal preferably ranges between 14 microns and 500 microns, more particularly between 14 microns and 350 microns.

In a preferred embodiment of the filter element according to the invention, the said profiled and supporting wires, at the level of the connection between their weld foot and the first end of their side flanks, comprise a connecting edge, which extends in the direction of the centreline of the particular profiled or supporting wire.

Preferably, the protruding portion which forms the weld foot has a width which is smaller than the distance between the said first ends. The said connecting edge is situated between the weld foot and the first end of a side flank.

In a first preferred embodiment, the said connecting edge extends in a direction virtually at right angles to the centreline. In this way, a space is created for the weld upset. As a result, the weld upset, when the profiled wire is welded on a supporting wire, will end up practically no longer outside the zone demarcated by the first ends and it becomes possible to position the profiled wire exactly on the supporting wires of a filter element. The filtering openings then remain completely free, so that a perfect filtration can be realized. In order to have sufficient space available for the weld upset, the weld foot has in this embodiment a height ranging between 0.6 mm and 0.8 mm.

The height of the weld foot can be further reduced to preferably a height of maximally 0.4 mm, preferably maximally 0.3 mm, by, in a second preferred embodiment of the filter in accordance with the invention, providing an indentation in the said connecting edge, which indentation extends in the direction of the head part and is designed to receive a weld upset which is formed during the welding of the profiled wires on the supporting wires.

The profiled wire in the filter according to this invention is preferably made of metal.

In a preferential embodiment of the filter element according to the invention, the said filter is a flat filter. In a flat filter, the separate profiled wires are welded next to each other on supporting wires, at a certain distance apart.

In another preferential embodiment of the filter according to the invention, the said filter is a round filter.

In the hereinafter following detailed description of the filter in accordance with the invention, the said characteristics and advantages of the invention are further explained. It should be clear that the sole aim of this description consists in illustrating the general principles of this invention by a concrete example, and that nothing in this description can thus be interpreted as a limitation of the scope of the patent rights claimed in the claims, nor of the field of application of this invention.

In the hereinafter following description, reference is made by means of reference numerals to the hereto appended figures, wherein:
- ***Figure 1******:** is a detailed representation of a filter element according to the prior art having a profiled wire which in cross section has a shape consistent with an isosceles triangle;*
- ***Figure 2******:** is a detailed representation of a part of the filter surface on which the filtering openings are visible;*
- ***Figure 3******:** is a top view of a filter element according to the invention provided with supporting and profiled wires;*
- ***Figure 4******:** is a detailed representation of the region B encircled in* *Figure 3**;*
- ***Figure 5******:** is a front view of a part of a filter element according to the invention;*
- ***Figure 6******:** is a detailed representation of the region C encircled in* *Figure 5**;*
- ***Figure 7******:** is a representation of a first embodiment of a supporting wire (7) or profiled wire (2) suitable for a filter element in accordance with the invention;*
- ***Figure 8******:** is a representation of a second embodiment of a supporting wire (7) or profiled wire (2) suitable for a filter element in accordance with the invention.*

The filter elements (1) in accordance with this invention are composed of longitudinally running longitudinal bars or supporting wires (7) on which a profiled wire (2) is welded. As can be seen from Figure 2, between one or more mutually adjacent profiled wires (2) are formed filtering openings (8) having a well-defined gap opening. The number of supporting wires (7) and profiled wires (2) is dependent on the size of the filter element (1).

The filter has been specifically developed to filter filamentary impurities having a minimum length of 10 microns from liquids and/or gases. Examples of such impurities are hairs of humans or animals, short textile or synthetic fibres, etc.

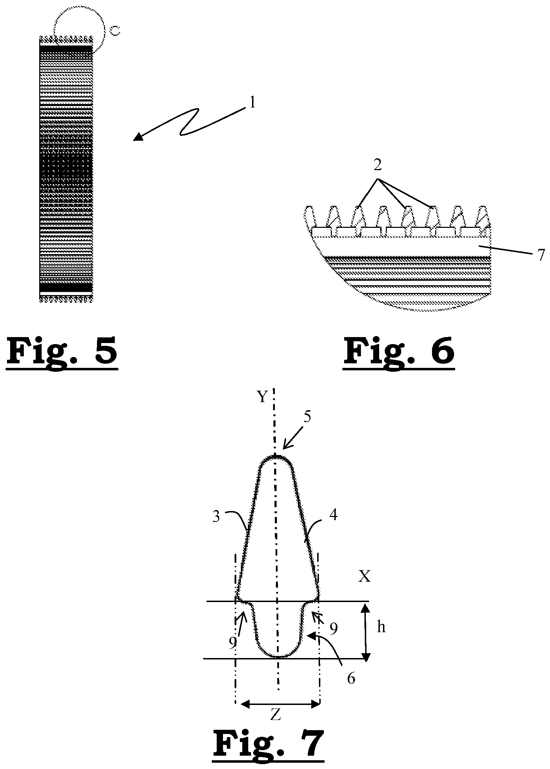

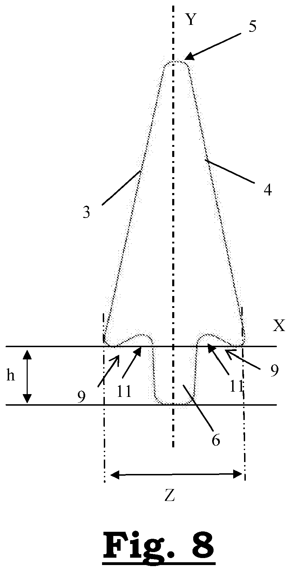

In the filter according to the invention, the supporting wires (7) and profiled wires (2), as can be seen from, inter alia, Figs. 3 to 6, are identically constructed, thus each comprise (see Figures 7 and 8) two side flanks (3,4), which at a first end are connected to each other via a weld foot. At the level of the connection between the first end and the weld foot is formed a connecting edge (9). At the second end, the side flanks are connected to each other via a head part (5) situated opposite the weld foot. The distance between the said side flanks becomes larger in the direction of the weld foot. The weld foot further comprises at least one protruding portion (6). This portion (6) protrudes below the plane (X) formed by the said first ends. A profiled wire of this type has already been described in BE 1 017 816.

In the production of the filter elements (1), the protruding portion of the profiled wire (2) is pushed with the aid of a welding device, in particular via a welding electrode, against the protruding portion of the supporting wires (7) and connected thereto. The welding electrode here has the shape or angle consistent with the profile of the profiled wire which has to be welded.

The distance between the profiled wires (2) is mutually the same as the distance between the longitudinally running supporting wires (7). By constructing the filter in this way, square filtering openings (see Figure 2) of specific dimensions are formed. In order to be able to filter out sufficient filamentary impurities, it is expedient to produce a filter whose filtering openings have a gap diagonal ranging between 14 microns and 707 microns. Such a gap diagonal is consistent with a gap width ranging between 10 microns and 500 microns. With filter elements whose gap openings have such dimensions, to all intents and purposes most filamentary impurities can be filtered out of a liquid or gas. Of course, impurities of shapes differing therefrom can also be filtered out of a liquid or gas.

In the applied supporting and profiled wires (2), the weld foot comprises at least one protruding portion (6), which protrudes below the plane (X) formed by the said first ends. Furthermore, the protruding portion (6) has a width which is smaller than the distance between the said first ends. In this way, a space is created for the weld upset. As a result, the weld upset, when the profiled wire is welded on a supporting wire (7), will no longer end up outside the zone (Z) demarcated by the vertical planes extending along the first ends of the side flanks (3, 4) and it becomes possible to position the profiled wire (2) exactly on the supporting wires (7) of a filter element (1).

As has been discussed above and, inter alia, can be deduced from Figure 7, the protruding portion protrudes below the (horizontal) plane (X) formed by the first ends. The profiled wire (2) or supporting wire (7) represented in Figure 7 is set back from the two first ends, in the direction of the centreline (Y) of the profiled or supporting wire (7), wherein the connecting edge (9) forms a virtual right angle with this centreline (Y). In this way, the two flat sides (9), as it were, are formed. As a result of the presence of these flat sides (9), the wedge effect in the cleaning is countered. These flat sides further offer the advantage that the filtered-out material (10) cannot during the filtering get jammed in a wedge, since no wedge effect will any longer occur.
In order to have sufficient space available for the weld upset, in the embodiment shown in Figure 7 the weld foot has a height (h) ranging between 0.6 mm and 0.8 mm.

The height of the weld foot can however be reduced to a height (h) preferably of maximally 0.4 mm, preferably maximally 0.3 mm, by providing, in a second preferred embodiment represented in Figure 8, an indentation (11) (or recess) in the connecting edge. As can be seen from Figure 8, this indentation extends in the direction of the head part. The indentation is designed to receive the formed weld upset. The extra space created by the indentation (11) makes it possible to reduce the height of the weld foot. Through the reduction of the weld foot (6) and the use of the wire represented in Figure 8, with indentation, as the profiled and supporting wire, the wires end up with their first ends one against another following the welding. This by virtue of the fact that the weld upset will fill the indentation of both wires.

Furthermore, the centreline (Y) of the profiled or supporting wires (7) which is represented in Figure 7 is likewise a symmetrical axis of the said profiled or supporting wire (7). This does not however need to always be the case. Thus the centreline (Y) of the particular wire (2, 7) can be no symmetrical axis, in this case is set back, for example, also only at one first end, so that this profiled wire (2) comprises only one flat side.

The protruding portion has preferably a U-shaped cross section. However, alternative embodiments of the profiled or supporting wire, having a different cross section (rectangular, triangular, ...) of the protruding portion or the complete profiled or supporting wire are likewise possible.

Through the use of the profiled and supporting wire (7) according to the invention, the tolerance at the gap opening will reduce to +/- 10 microns. As a result, it becomes possible to produce filter elements (1) having gap openings which have a gap width up to 10 microns. With these new tolerances at the gap opening, it will additionally be possible to filter more accurately. Moreover, as a result of the smaller tolerances at the gap opening, for larger gap openings (for example filters having gap openings of 0.2 mm) it is possible to filter solid components more accurately.

Since filter elements (1) can be produced with a gap opening up to 10 microns, it is now possible to filter out, for example, small filamentary impurities (having a length up to 10 microns). The filter elements according to the invention can even be used for air, dust and gas filtration.

## Claims

1. Liquid or gas filter (1) suitable for removing filamentary impurities from liquids or gases, comprising a number of longitudinally running supporting wires (7) on which a profiled wire (2) is welded, wherein filtering openings (8) are provided between one or more mutually adjacent profiled wires (2), the said supporting wires (7) and profiled wires (2) each comprising two side flanks (3,4), which at a first end are connected to each other via a weld foot and at a second end are connected to each other via a head part (5) situated opposite the weld foot, **characterized in that** the distance between the said side flanks of the said supporting wires (7) and profiled wires (2) becomes larger in the direction of the weld foot, which is formed of at least one protruding portion (6), and **in that** the protruding portion (6) of the profiled wire (2) is connected to the protruding portion of the supporting wire (7).

2. Liquid or gas filter (1) according to Claim 1, **characterized in that** the protruding portion (6) protrudes below the plane (X) formed by the said first ends.

3. Liquid or gas filter (1) according to Claim 1 or 2, **characterized in that** the distance between the profiled wires (2) is mutually the same as the distance between the longitudinally running supporting wires (7).

4. Liquid or gas filter (1) according to one of the preceding claims, **characterized in that** the formed filtering openings (8) have a gap opening having a gap width ranging between 10 and 500 microns.

5. Liquid or gas filter (1) according to one of the preceding claims, **characterized in that** the said profiled wires (2) and supporting wires (7), at the level of the connection between their weld foot and the first end of their side flanks (3; 4), comprise a connecting edge (9), which extends in the direction of the centreline (Y) of the particular profiled or supporting wire.

6. Liquid or gas filter (1) according to Claim 5, **characterized in that** the said connecting edge (9) extends in a direction virtually at right angles to the centreline (Y).

7. Liquid or gas filter (1) according to Claim 6, **characterized in that** the height (h) of the weld foot ranges between 0.6 and 0.8 mm.

8. Liquid or gas filter (1) according to Claim 5, **characterized in that** the said connecting edge (9) comprises an indentational (11), which extends in the direction of the head part and is designed to receive a weld upset which is formed during the welding of the profiled wires (2) on the supporting wires (7).

9. Liquid or gas filter (1) according to Claim 8, **characterized in that** the height (h) of the weld foot is maximally 0.4 mm.

10. Liquid or gas filter (1) according to one of the preceding claims, **characterized in that** the supporting wires (7) and profiled wires (2) are made of metal.

11. Liquid or gas filter (1) according to one of the preceding claims, **characterized in that** the formed filtering openings (8) have a gap opening having a gap diagonal ranging between 14 microns and 707 microns.

12. Liquid or gas filter (1) according to one of the preceding claims, **characterized in that** the said filter (1) is a flat filter.

13. Liquid or gas filter (1) according to one of Claims 1 to 11, **characterized in that** the said filter (1) is a round filter.

## Patentansprüche

1. Flüssigkeits- oder Gasfilter (1) zur Entfernung von faserförmigen Verunreinigungen aus Flüssigkeiten oder Gasen, umfassend eine Anzahl von längs verlaufenden Stützdrähten (7), auf die ein Profildraht (2) geschweißt ist, wobei Filteröffnungen (8) zwischen einem oder mehreren zueinander benachbarten Profildrähten (2) bereitgestellt sind, wobei die Stützdrähte (7) und Profildrähte (2) jeweils zwei Seitenflanken (3,4) umfassen, die an einem ersten Ende über einen Schweißfuß miteinander verbunden sind und an einem zweiten Ende über ein Kopfteil (5), das dem Schweißfuß gegenüber angeordnet ist, miteinander verbunden sind, **dadurch gekennzeichnet, dass** der Abstand zwischen den Seitenflanken der Stützdrähte (7) und der Profildrähte (2) in Richtung des Schweißfußes, der aus mindestens einem vorstehenden Abschnitt (6) gebildet ist, größer wird, und dadurch, dass der vorstehende Abschnitt (6) des Profildrahtes (2) mit dem vorstehenden Abschnitt des Stützdrahtes (7) verbunden ist.

2. Flüssigkeits- oder Gasfilter (1) nach Anspruch 1, **dadurch gekennzeichnet, dass** der vorstehende Abschnitt (6) unterhalb der Ebene (X) vorsteht, die durch die ersten Enden gebildet wird.

3. Flüssigkeits- oder Gasfilter (1) nach Anspruch 1 oder 2, **dadurch gekennzeichnet, dass** der Abstand zwischen den Profildrähten (2) zueinander der gleiche wie der Abstand der längs verlaufenden Stützdrähte (7) ist.

4. Flüssigkeits- oder Gasfilter (1) nach einem der vorhergehenden Ansprüche, **dadurch gekennzeichnet, dass** die gebildeten Filteröffnungen (8) eine Spaltöffnung mit einer Spaltbreite zwischen 10 und 500 µm aufweisen.

5. Flüssigkeits- oder Gasfilter (1) nach einem der vorhergehenden Ansprüche, **dadurch gekennzeichnet, dass** die Profildrähte (2) und Stützdrähte (7) in Höhe der Verbindung zwischen ihrem Schweißfuß und dem ersten Ende ihrer Seitenflanken sind (3; 4) einen Verbindungsrand (9) umfassen, der sich in Richtung der Mittellinie (Y) des jeweiligen Profil- oder Stützdrahtes erstreckt.

6. Flüssigkeits- oder Gasfilter (1) nach Anspruch 5, **dadurch gekennzeichnet, dass** sich der Verbindungsrand (9) in einer Richtung nahezu rechtwinklig zur Mittellinie (Y) erstreckt.

7. Flüssigkeits- oder Gasfilter (1) nach Anspruch 6, **dadurch gekennzeichnet, dass** die Höhe (h) des Schweißfußes zwischen 0,6 und 0,8 mm liegt.

8. Flüssigkeits - oder Gasfilter (1) nach Anspruch 5, **dadurch gekennzeichnet, dass** der Verbindungsrand (9) eine Einkerbung (11) aufweist, die sich in Richtung des Kopfteils erstreckt und dazu ausgebildet ist, einen Schweißwulst aufzunehmen, der während des Schweißens der Profildrähte (2) auf den Stützdrähten (7) gebildet wird.

9. Flüssigkeits- oder Gasfilter (1) nach Anspruch 8, **dadurch gekennzeichnet, dass** die Höhe (h) des Schweißfußes maximal 0,4 mm beträgt.

10. Flüssigkeits- oder Gasfilter (1) nach einem der vorhergehenden Ansprüche, **dadurch gekennzeichnet, dass** die Stützdrähte (7) und Profildrähte (2) aus Metall hergestellt sind.

11. Flüssigkeits- oder Gasfilter (1) nach einem der vorhergehenden Ansprüche, **dadurch gekennzeichnet, dass** die gebildeten Filteröffnungen (8) eine Spaltöffnung aufweisen, die eine Spaltdiagonale zwischen 14 und 707 µm aufweist.

12. Flüssigkeits- oder Gasfilter (1) nach einem der vorhergehenden Ansprüche, **dadurch gekennzeichnet, dass** der Filter (1) ein Flachfilter ist.

13. Flüssigkeits- oder Gasfilter (1) nach einem der Ansprüche 1 bis 11, **dadurch gekennzeichnet, dass** der Filter (1) ein Rundfilter ist.

## Revendications

1. Filtre à liquide ou à gaz (1) approprié pour l'élimination des impuretés filamenteuses provenant de liquides ou de gaz, comprenant un certain nombre de fils de support (7) s'étendant longitudinalement sur lesquels un fil profilé (2) est soudé, des ouvertures de filtration (8) étant présentes entre un ou plusieurs fils profilés (2) mutuellement adjacents, lesdits fils de support (7) et fils profilés (2) comprenant chacun deux flancs latéraux (3, 4) qui, au niveau d'une première extrémité sont reliés les uns aux autres par l'intermédiaire d'un point de soudure et au niveau d'une seconde extrémité sont reliés les uns aux autres par l'intermédiaire d'une partie tête (5) située à l'opposé du point de soudure, **caractérisé en ce que** la distance entre lesdits flancs latéraux desdits fils de support (7) et fils profilés (2) augmente en direction du point de soudure, qui comprend au moins une partie en saillie (6), et **en ce que** la partie en saillie (6) du fil profilé (2) est reliée à la partie en saillie du fil de support (7).

2. Filtre à liquide ou à gaz (1) selon la revendication 1, **caractérisé en ce que** la partie en saillie (6) dépasse en dessous du plan (X) formé par lesdites premières extrémités.

3. Filtre à liquide ou à gaz (1) selon la revendication 1 ou 2, **caractérisé en ce que** la distance entre les fils profilés (2) est mutuellement la même que la distance entre les fils de support (7) s'étendant longitudinalement.

4. Filtre à liquide ou à gaz (1) selon l'une des revendications précédentes, **caractérisé en ce que** les ouvertures de filtration (8) formées ont une ouverture de joint ayant une largeur de joint comprise entre 10 et 500 microns.

5. Filtre à liquide ou à gaz (1) selon l'une des revendications précédentes, **caractérisé en ce que** lesdits fils profilés (2) et fils de support (7), au niveau de la liaison entre leur point de soudure et la première extrémité de leurs flancs latéraux (3 ; 4), comprennent un bord de liaison (9), qui s'étend dans la direction de l'axe central (Y) du fil profilé ou de support particulier.

6. Filtre à liquide ou à gaz (1) selon la revendication 5, **caractérisé en ce que** ledit bord de liaison (9) s'étend dans une direction pratiquement perpendiculaire à l'axe central (Y).

7. Filtre à liquide ou à gaz (1) selon la revendication 6, **caractérisé en ce que** la hauteur (h) du point de soudure est comprise entre 0,6 et 0,8 mm.

8. Filtre à liquide ou à gaz (1) selon la revendication 5, **caractérisé en ce que** ledit bord de liaison (9) comprend un renfoncement (11) qui s'étend dans la direction de la partie tête et est conçu pour recevoir un refoulement de soudure qui est formé pendant le soudage des fils profilés (2) sur les fils de support (7) .

9. Filtre à liquide ou à gaz (1) selon la revendication 8, **caractérisé en ce que** la hauteur (h) du point de soudure est au maximum de 0,4 mm.

10. Filtre à liquide ou à gaz (1) selon l'une des revendications précédentes, **caractérisé en ce que** les fils de support (7) et les fils profilés (2) sont en métal.

11. Filtre à liquide ou à gaz (1) selon l'une des revendications précédentes, **caractérisé en ce que** les ouvertures de filtration (8) formées ont une ouverture de joint ayant une diagonale de joint comprise entre 14 microns et 707 microns.

12. Filtre à liquide ou à gaz (1) selon l'une des revendications précédentes, **caractérisé en ce que** ledit filtre (1) est un filtre plat.

13. Filtre à liquide ou à gaz (1) selon l'une des revendications 1 à 11, **caractérisé en ce que** ledit filtre (1) est un filtre rond.
